# EUROPEAN PATENT APPLICATION

(11) **EP 2 436 962 A1**
(43) Date of publication of application: **04.04.2012**
(21) Application number: 10780352.0
(22) Date of filing: 23.03.2010
(51) Int. Cl.: F16K 31/68

(54) **TEMPERATURE-SENSITIVE ACTUATOR**

(30) Priority: 28.05.2009 JP 2009129133
(71) Applicant: Nippon Thermostat Co., Ltd., Kiyose-shi Tokyo 204-0003 (JP)
(72) Inventor: IZUKA Kazuyoshi, Kiyose-shi Tokyo 204-0003 (JP); SASAKI Hidetoshi, Kiyose-shi Tokyo 204-0003 (JP); TOYONAGA Shinya, Kiyose-shi Tokyo 204-0003 (JP); FURUKAWA Manami, Kiyose-shi Tokyo 204-0003 (JP)
(74) Representative: Jannig, Peter
(86) International application number: PCT/JP2010/054967
(87) International publication number: WO 2010/137395

(57) **Abstract**

Disclosed is a temperature-sensitive actuator which is configured in such a manner that heat from a PTC heater for the temperature-sensitive part of a thermoelement can be received appropriately and reliably in a required state. Specifically disclosed is a temperature-sensitive actuator (10) which is configured to sense the temperature although a piston (14) is operated forcibly by generating heat from a PTC heater (20) and warming the temperature-sensitive part (13) of a wax thermoelement, wherein a contact member (40) is interposed between the temperature-sensitive part of a thermoelement and the PTC heater. Consequently, variation in the amount of heat which is received at the temperature-sensitive part of a thermoelement from the PTC heater is limited, and the stabilized output (lift) of the thermoelement can be ensured.

## Description

### BACKGROUND OF THE INVENTION

### Technical Field

The present invention relates to a temperature-sensitive actuator comprised of a thermo-element that advances and retracts a piston in response to changes in temperature and a PTC heater for selectively heating the temperature-sensitive part of the thermo-element.

### Description of the Background Art

This type of temperature-sensitive actuator is used in a driven member of an electronic valve control device or the like of a carburetor adapted to an ordinary engine, as a temperature-sensitive actuator for controlling the operation of a choke or a throttle that opens and closes the intake of the carburetor.

Conventionally, this type of temperature-sensitive actuator has a thermo-element with thermo wax enclosed in its temperature-sensitive part, and is constructed of a piston that advances and retreats axially in response to expansion and contraction of the thermo wax with changes in temperature and a PTC heater that heats the temperature-sensitive part with a given electric current (see for example, Utility Model Application Publication No. H05-8158).

In addition, this type of temperature-sensitive actuator is configured so that it is possible to control the change in the volume of the thermo wax attendant upon changes in temperature with the PTC heater, thereby moving the piston only the required lift amount, operating at a given timing with only the necessary energizing to move the piston, and operating independently even when power supply is stopped, to move the appropriate moving member.

However, with a temperature-sensitive actuator having the configuration described above, there is a risk that contact between the thermo-element temperature-sensitive part (i.e., the case) and the PTC heater becomes a point-contact. Such point-contact arises, for example, in a case in which the actuator is tilted during assembly, or the contact surface is not flat but uneven, or the degree of flatness increases due to deformation (bending, etc.) of the PTC heater occurring during formation or warping of the PTC heater due to machining.

Further, with the above-described temperature-sensitive part of the thermo-element, in order to prevent differences between products from arising due to tiny differences in mounting or the amount of wax sealed within occurring during production, it is common to carry out an adjustment step whereby the bottom of the thermo-element case is dented and deformed. However, depending on the degree of adjustment a variety of things occur in the resulting adjustment mark. With the deformation stemming from this adjustment mark, the degree of flatness of the machining, warping, shape and the like, there is a risk that the contact between the thermo-element temperature-sensitive part and the PTC heater becomes a point-contact.

Occurrence of the point-contact condition described above leads to such inconveniences as lack of adequate energization, as a result of which the PTC heater cannot exert its maximum heat-generating potential; heat cannot be propagated smoothly from the PTC heater, leading to an inability to attain stable PTC heater output; and variations arise between individual actuators. There is thus a need for some countermeasure capable of solving these sorts of problems.

### SUMMARY OF THE INVENTION

The present invention is conceived in light of the circumstances described above and has as its object to provide a thermostat device configured to be able to energize the PTC heater and propagate heat from the PTC heater for the thermo-element temperature-sensitive in the required state inexpensively and reliably.

To achieve this object, the present invention (according to claim 1) provides a temperature-sensitive actuator characterized by having a thermo-element having a thermal expansion unit sealed within a temperature-sensitive part of the thermo-element; a PTC heater that selectively heats the temperature-sensitive part of the thermo-element; and a contact member inserted between the temperature-sensitive part of the thermo-element and the PTC heater.

The present invention (according to claim 2) provides a temperature-sensitive actuator according to claim 1, **characterized in that** the contact member has a shape such that a portion of a side of the contact member that contacts the thermo-element lacks a contacting part.

The present invention (according to claim 3) provides a temperature-sensitive actuator according to either claim 1 or claim 2, further characterized by having a pair of electrical terminals provided at an actuator mount for the temperature-sensitive actuator and configured to fixedly hold the temperature-sensitive actuator on both sides of the temperature-sensitive actuator along a central axis of the temperature-sensitive actuator, **characterized in that** the temperature-sensitive actuator is configured to be fixedly held at the actuator mount side by being engaged and held at two places in the axial direction of the temperature-sensitive actuator by the pair of electrical terminals.

### Effect of the Invention

As described above, the temperature-sensitive actuator according to the present invention is configured so as to interpose a contact member between the thermo-element and the PTC heater, and thus is able to secure a sufficient contact area, eliminate variations in heat transmission and heater output (energization amount) between individual products, and achieve stability.

That is, with the conventional structure, the contact between the thermo-element and the PTC heater is a point-contact, so that energizing is not sufficiently carried out, the amount of energization is small, and the amount of heat generated is reduced, such that the PTC heater cannot exert its heat-generating capability to maximum effect, or the transmission of heat from the PTC heater is not conducted smoothly, leading to an inability to achieve stable PTC heater output. However, with the present invention, the contact member can provide sufficient contact area for energizing and heat transmission between the thermo-element and the PTC heater, and moreover serves the function of holding and storing heat generated between the thermo-element and the PTC heater, thereby enabling the heat to be conducted to the thermo-element case efficiently.

In addition, the contact member according to the present invention, because it is heated by the heat generated by the PTC heater, enables the PTC heater to continue to generate heat efficiently. As a result, although it takes longer for the thermo-element to begin to operate than it would without a contact member, once the temperature of the contact member rises and the contact member retains a certain amount of heat, the amount of heat that the thermo-element receives also increases, resulting in faster lift and better responsiveness, and further, the PTC heater output is stable, so that it is possible for the thermo-element to operate in the required state.

In addition, according to the present invention, the contact member is formed so as to not have, at a portion of a side of the contact member that contacts the thermo-element, a portion that contacts the thermo-element (for example, the contact member has an annular shape). Accordingly, the contact area between the bottom of the thermo-element case and the contact member and the contact area between the PTC heater and the contact member is constant, and it is possible to keep the amount of heat transmitted to the thermo-element and the amount of heat generated by the PTC heater constant regardless of the size of the adjustment mark added to the thermo-element temperature-sensitive part during manufacture. As a result, variations between products in the amount of lift described above disappear.

In particular, by making the hole in the annular contact member larger than the adjustment mark in the bottom of the case of the thermo-element temperature-sensitive part, and further by providing a gap so that there is no overlapping of the adjustment mark, it is possible to keep the contact area between bottom surface of the thermo-element case and the contact member and the contact area between the contact member and the PTC heater constant regardless of the size of the adjustment mark in the bottom of the thermo-element case, and thus it is possible to keep the amount of heat transmitted to the thermo-element and the amount of heat generated by the PTC heater constant regardless of the size of the adjustment mark in the bottom of the thermo-element case, increasing the amount of heat that the thermo-element absorbs, resulting in faster lift and improved responsiveness, thereby eliminating the variation in lift amount between products described above.

Further, the present invention also has a good effect on the manufacturing process as well, insofar as there is no longer any need to adjust the output of the PTC heater in order to minimize variation in the amount of lift described above.

That is, with the method of direct contact between the thermo-element and the PTC heater as in the conventional structure, there arise variations in the contact area between the thermo-element and the PTC heater attributable to differences in the size of the above-described adjustment mark that in turn affect the amount of heat generated and the transmission of heat, thus causing variations in the amount of lift to occur. Even assuming an annular PTC heater were to be manufactured, its machining would be difficult and consequently it would be costly. However, providing an annular contact member allows the actuator to be manufactured inexpensively. It should be noted that it is possible to select the shape of the contact member from among a variety of different shapes, including round, square, or the like, provided only that the contact member is the same size as or larger than the above-described adjustment mark, and does not overlap the adjustment mark.

In addition, in the present invention, the mount for mounting and fixing the temperature-sensitive actuator in place is provided with electrical terminals that serve to engage and hold the temperature-sensitive actuator and also function as electrode terminals, thereby facilitating fixing and attachment of the temperature-sensitive actuator to the mount as well as eliminating the need for attachment parts and screws or the like, thus eliminating the need for tightening screws.

In particular, with the conventional structure, in order to hold the thermo-element and the PTC heater the thermo-element and the PTC heater are inserted in the actuator case, capped, and screwed together to form the thermo-element/PTC heater assembly, which assembly is then further screwed together and fixed in place. By contrast, the present invention is configured to provide the housing mount with electrode terminals on which the thermo-element is mounted, thereby providing greater freedom of layout design.

Further, according to the present invention, in the mounting of the temperature-sensitive actuator onto the housing or other such mount of the device that is the drive source of the temperature-sensitive actuator, it is possible to fix the temperature-sensitive actuator fully in place simply by pressing the actuator into the electrical terminals that act as fixing jigs, thus eliminating the need for the screws, bolts, nuts, and other such fixing means required conventionally, thereby facilitating assembly. Moreover, since there is no need to insert terminal fittings in the body of the actuator, this arrangement has the additional advantage that it is possible to minimize both cost and the number of parts.

### BRIEF DESCRIPTION OF THE SEVERAL VIEWS OF THE DRAWINGS

FIG. 1 is a schematic cross-sectional view of the entirety of one embodiment of a temperature-sensitive actuator according to the present invention;
FIG. 2 is a schematic perspective view of the exterior of the temperature-sensitive actuator according to the present invention;
FIG. 3 is a graph illustrating operating characteristics of a temperature-sensitive actuator with and without the contact member that is the distinctive feature of the present invention;
FIGS. 4A and 4B are partial enlarged cross-sectional views of variations of the contact member that is the distinctive feature of the present invention; and
FIG. 5 is a schematic exploded perspective view of another embodiment of a temperature-sensitive actuator according to the present invention, illustrating a state in which the temperature-sensitive actuator is mounted on an actuator mount.

### DETAILED DESCRIPTION OF THE INVENTION

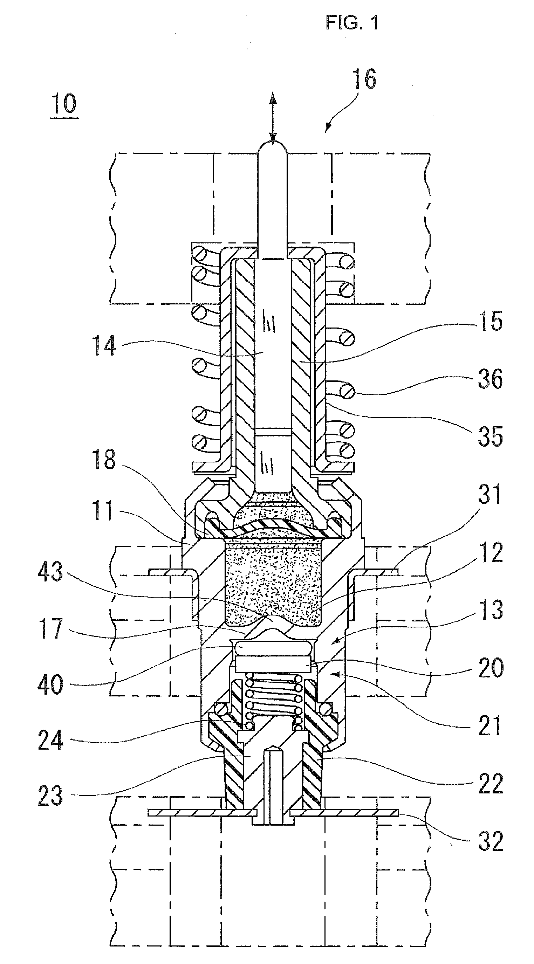

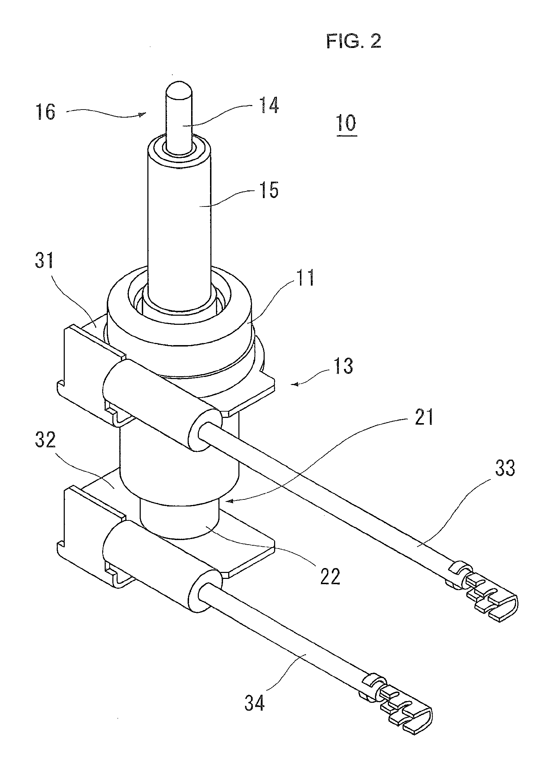

FIG. 1 and FIG. 2 show one embodiment of a temperature-sensitive actuator according to the present invention.

In these drawings, the temperature-sensitive actuator indicated in its entirety by reference numeral 10 is comprised of a temperature-sensitive part 13, itself comprised of a thermal expansion unit such as wax 12 sealed inside a substantially cylindrical case 11, and a moving part 16, itself comprised of a piston 14 that advances and retreats along the axis of the temperature-sensitive actuator 10 with expansion and contraction of the wax 12 within the temperature-sensitive part 13 and a guide tube 15 fixedly mounted on the tip of the case 11 so as to slidably hold the piston 14, thus forming a thermo-element.

Reference numeral 18 in the drawings indicates a diaphragm provided between the wax 12 of the temperature-sensitive part 13 and the piston 14. The diaphragm 14 is movable with expansion and contraction of the wax 12, and that movement is transmitted to the piston 14 via a sealed medium and an auxiliary piston, such that the piston 14 advances and retreats axially. The piston 14 is configured so that, through a spring 36 that gives the temperature-sensitive actuator 10 an elastic holding capability, the piston 14 can move as the wax 12 contracts via a cap-shaped tubular body 35.

Further, a PTC heater 20 is installed in a lower end of the case 11, at a bottom side of the case 11 that constitutes the thermo-element temperature-sensitive part 13 (in this case, bellow a dividing wall 17 formed inside the case 11), thus forming a heater holder 21.

Here, reference numeral 22 in the drawing indicates a terminal base fitted into the lower end of the case 11, 23 indicates a terminal held within the terminal base 22, and 24 indicates an electrically conductive spring interposed between an inner end of the terminal 23 and the PTC terminal 20 that also functions as a lead wire.

The conductive spring 24 presses against the PTC heater 20 and at the same time also absorbs vibration, thereby also functioning to prevent the PTC heater 20 from being destroyed by these vibrations. Further, because the PTC heater 20 is biased by the conductive spring 24, if, for example, the PTC heater 20 or the like is assembled tilted during assembly, or the contact surface of the PTC heater 20 or the like is not flat but uneven, or further, if the PTC heater 20 is deformed (bent) during formation, the dividing wall 17 of the case 11 is deformed by an adjustment mark, or the degree of flatness increases due to undulation from machining, good contact area of the PTC heater 20 for the dividing wall 17 that divides the thermo-element temperature-sensitive part 13 can still be obtained.

In addition, a pair of electrode terminal jigs 31, 32 are preset onto the outside the case 11 as well as the lower end of the terminal 23. Lead wires 33, 34 leading from the jigs 31, 32 are connected to a controller, not shown, by which it is possible to selectively energize the PTC heater 20 to obtain reciprocal movement of the piston as the temperature-sensitive actuator 10.

It is to be noted that reference numeral 35 in FIG. 1 indicates the cap-shaped tubular body fitted onto the guide tube 15 of the temperature-sensitive actuator 10. Reference numeral 36 indicates the spring, which, as described above, acts to elastically hold the temperature-sensitive actuator on a mount on the main device side and to push the lifted piston 14 back when the wax 12 contracts.

In addition, the temperature-sensitive actuator 10 described above is made of metal material having good thermal conductivity, the wax or other thermal expansion unit 12 is made of material that changes volume as the temperature changes, and the other parts have structures that are known conventionally, and detailed discussion thereof is omitted.

According to the present invention, in the temperature-sensitive actuator 10 configured as described above, the provision of the contact member 40 so as to be interposed between the thermo-element temperature-sensitive part 13 and the PTC heater 20 is the distinctive feature.

A copper material or the like having good thermal conductivity may be used as the contact member 40. Of course, the contact member 40 is not limited to such material, and anything having the proper volume, shape, and composition may be used as the contact member 40.

In addition, the contact member 40 also has the function of connecting the PTC heater 20 to the terminal jig 31 and the lead wire 33 via the case 11.

The contact member 40 configured as described above secures a sufficient contact area for energizing and transmitting heat between the thermo-element temperature-sensitive part 13 and the PTC heater 20 and putting thermal conductivity performance into the required state, thereby enabling the thermo-element temperature-sensitive part 13 to be controlled and heated to the required state.

In addition, the contact member 40 serves to hold and store the heat generated between the thermo-element temperature-sensitive part 13 and the PTC heater 20, thereby enabling transmission of heat from the thermo-element temperature-sensitive part 13 to the case 11 to be conducted efficiently.

Further, since the contact member 40 is heated by the heat generated by the PTC heater 20, the PTC heater can continue to generate heat efficiently to replace that which is absorbed by the contact member 40, thereby enabling the PTC heater 20 output to be stabilized.

Then, using the contact member 40 described above, the heat from the PTC heater 20 is conducted to the contact member 40 and then to the thermo-element temperature-sensitive part 13 via the contact member 40.

If the PTC heater 20 does not conduct heat to the surrounding members, for example to the element case 11, the heat remains trapped in the PTC heater itself, its temperature rises, and its internal resistance increases, thus decreasing its heat-generating capability, whereby it cannot continue to generate heat efficiently. However, the contact member 40, which continuously absorbs the heat generated by the PTC heater 20, is disposed between the PTC heater 20 and the thermo-element temperature-sensitive part 13, thereby enabling the PTC heater 20 to continue to generate heat efficiently. Therefore, the PTC heater 20 can continue to output stably.

The temperature-sensitive actuator 10 having the configuration described above, because it is configured to interpose the contact member 40 between the thermo-element temperature-sensitive part 13 and the PTC heater 20, can provide sufficient contact area to eliminate any discrepancies in heat transmission and heater output (amount of heat generated) from one product to the next and stabilize them.

Put differently, with the conventional structure, the contact between the thermo-element (temperature-sensitive part 13) and the PTC heater 20 is a point-contact, leading to insufficient energizing and a consequent inability of the PTC heater to exert its heat-generating capability to maximum effect, or cases in which transmission of heat from the PTC heater is not conducted smoothly, leading to an inability to obtain stable PTC heater output. However, in the present invention, the contact member 40 can provide sufficient contact area for energizing and heat transmission between the thermo-element temperature-sensitive part 13 and the PTC heater 20, and moreover, serves the function of holding and storing heat generated between the thermo-element temperature-sensitive part 13 and the PTC heater 20, thereby enabling the heat to be conducted to the thermo-element case 11 efficiently.

In addition, the contact member 40 described above, because it is heated by the heat generated by the PTC heater 20, enables the PTC heater 20 to continue to generate heat efficiently. As a result, although the thermo-element takes longer to operate longer at the beginning of energizing than it would without a contact member, heat can continue to be conducted to the temperature-sensitive part 13 for a certain period of time even after energizing is stopped, thus minimizing power consumption and also achieving energy savings. Moreover, once the temperature of the contact member 40 rises and the contact member 40 holds a certain amount of heat, the PTC heater 20 output stabilizes, allowing the thermo-element to be operated continuously in the required state.

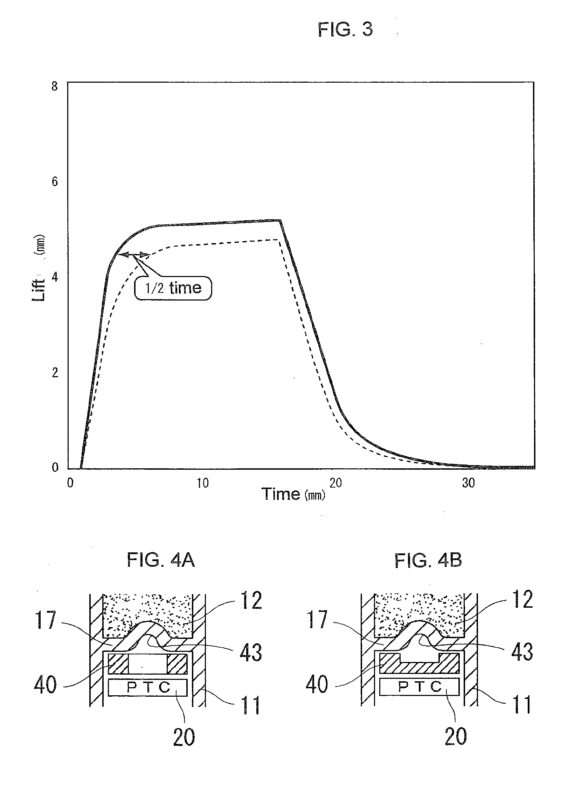

A graph of the operating characteristics of the temperature-sensitive actuator 10 according to the present invention described above is shown in FIG. 3.

In FIG. 3, compared to a conventional example (without a contact member) indicated by a broken line, the present invention (with the contact member 40) indicated by a solid line has superior rise characteristics during operation. For example, the time until the rise reaches a point at which the lift amount after initial energizing reaches 4.5 mm is ½ that of the conventional example. In addition, in the case of the present invention, it is also confirmed that the lift amount also increases by 10%.

Then, as is clear from the graph shown in FIG. 3, use of the contact member 40 enables the performance of the temperature-sensitive actuator 10 to be improved. Moreover, such performance improvement is obtained as a result of the heat retention and heat storage effects produced by the contact member 40, and its effect in actual use is clear. In other words, this effect is due to the smooth transfer of heat by the contact member 40 and the consequent ability of the PTC heater 20 to maintain a stable high output.

FIGS. 4A and 4B show other embodiments of the temperature-sensitive actuator according to the present invention.

As shown in these drawings, the contact member 40 is depicted as formed so as to not have, in a side of the contact member 40 that contacts the thermo-element, a portion, and in particular a central portion, that contacts the thermo-element; for example, the contact member 40 has an annular shape with an empty space (or a depression) in the middle.

More specifically, with the temperature-sensitive actuator 10, it is known that tiny differences in the mounting of the thermo-element temperature-sensitive part 13 or the amount of wax 12 sealed therewithin during manufacture produces differences (variations) between individual products. As a result, conventionally, in order to minimize such variation a dent is made in the bottom of the thermo-element case 11 after assembly as an indispensible step in the manufacturing process. Typically, by forcibly pushing in the chamber into which the wax 12 is put inside the thermo-element case 11, the projecting length of the piston 14 is forcibly adjusted, thereby adjusting the lift amount of the thermo-element to a reference value.

As a result, however, an adjustment mark 43 is formed in the bottom surface of the thermo-element case (the dividing wall 17). The size of the adjustment mark 43 varies depending on the extent of the adjustment.

By contrast, because the present invention forms the contact member in an annular shape, regardless of the existence of the adjustment mark 43 described above the contact area between the bottom of the thermo-element case 11 (the dividing wall 17) and the contact member 40 and the contact area between the contact member 40 and the PTC heater 20 is kept constant, and it is possible to keep the amount of heat transmitted to the thermo-element and the amount of energizing of the PTC heater constant regardless of the size of the adjustment mark added to the thermo-element temperature-sensitive part during manufacture. As a result, the temperature-sensitive actuator 10 eliminates the variation in lift amount between products described above.

In particular, by making the hole in the annular contact member 40 larger than the adjustment mark 43 in the bottom of the case (the dividing wall) of the thermo-element temperature-sensitive part 13, and further by providing a gap so that there is no overlapping of the adjustment mark 43, it is possible to keep the contact area between bottom surface of the thermo-element case 11 (the dividing wall 17) and the contact member 40 and the contact area between the contact member 40 and the PTC heater 20 constant regardless of the size of the adjustment mark 43 in the bottom of the case 11 of the thermo-element, and thus it is possible to keep the amount of heat transmitted to the thermo-element and the amount of energizing of the PTC heater 20 constant regardless of the size of the adjustment mark 43 in the bottom of the case 11 of the thermo-element, thereby eliminating the variation in lift amount between products described above.

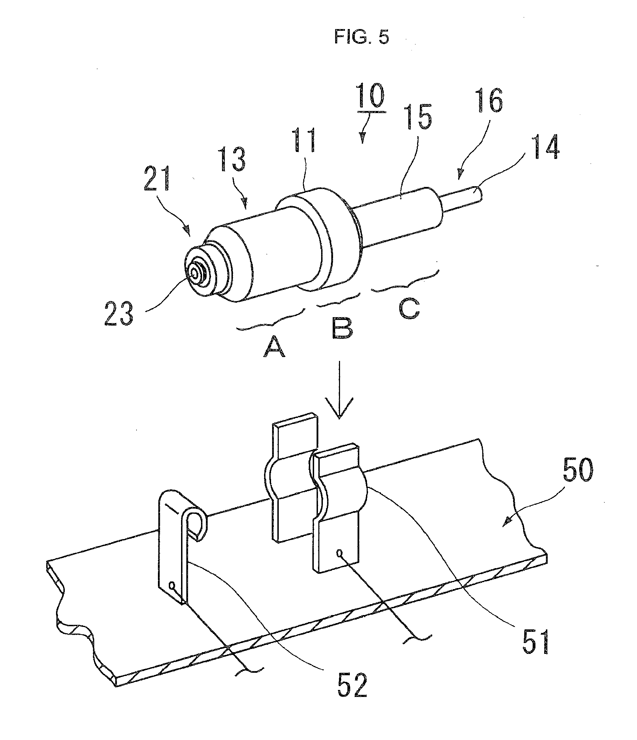

FIG. 5 shows yet another embodiment of the present invention.

That is, with the temperature-sensitive actuator 10 in the embodiments described above, as shown for example in FIG. 2, the electrode terminal jigs 31, 32 with lead wires 33, 34 attached are fitted onto the outside of the case 11, and the whole assembly is configured so as to be mounted and fixed on a predetermined place on a mount on a main unit. Instead, as shown in FIG. 4, the present embodiment utilizes electrical terminals 51, 52 provided on the mount 50 side in place of the electrode terminal jigs 31, 32 described above, configured to engage and fixedly mount the temperature-sensitive actuator thereon.

More specifically, in the present embodiment, on the mount 50 for mounting and fixing the temperature-sensitive actuator 10, the body of the temperature-sensitive actuator (as shown in FIG. 5) provides the electrical terminals 51, 52 that serve to engage and hold the temperature-sensitive actuator 10 and also function as electrode terminals, which makes fixedly mounting the temperature-sensitive actuator 10 on the mount 50 easy and also provides greater freedom of layout design.

The electrical terminal 51 may be composed of a spring retention tab that sandwiches the central axis of the temperature-sensitive actuator 10 and presses against the temperature-sensitive actuator 10 from both sides, for example. Similarly, the electrical terminal 52 may be composed of a spring engagement tab that elastically contacts the terminal 23 exposed at the end of the heater holder 21 of the temperature-sensitive actuator 10. The temperature-sensitive actuator 10 is engaged and held in place by these electrical terminals 51, 52.

It is to be noted that, in the configuration shown in FIG. 5, a portion of intermediate diameter of the temperature-sensitive actuator 10 (indicated by reference character A in FIG. 5) is sandwiched by the pair of spring retention tabs that constitute the electrical terminal 51 and fixedly mounted in place. By fixedly mounting the temperature-sensitive actuator 10 at the portion of intermediate diameter A in this way, the electrical terminal 51 is engaged by a large-diameter portion of the temperature-sensitive actuator 10 (indicated by reference character B in FIG. 5) and the temperature-sensitive actuator 10 is held between the electrical terminal 51 and the electrical terminal 52, thereby restricting movement of the temperature-sensitive actuator in the axial direction (the direction in which the piston 14 advances and retreats).

Of course, the present arrangement is not limited to that which is described above, and alternatively, it is possible to arrange matters so that either the large-diameter portion B or a small-diameter portion (that portion of the guide tube 15 which is indicated by reference character C in FIG. 5) is sandwiched by the spring retention tabs that constitute the electrical terminal 51 to fixedly mount the temperature-sensitive actuator 10 in place. For example, when the small-diameter portion C of the temperature-sensitive actuator 10 is sandwiched by the electrical terminal 51 and fixedly mounted in place, an axial length of the cap-shaped tubular body 35 and the spring 36 that constitute a return spring mechanism fitted onto the guide tube 15 that is this small-diameter portion C may be shortened, and a portion pressed onto the electrical terminal 51 held and secured.

With the conventional structure, in order to hold the thermo-element temperature-sensitive part 13 and the PTC heater 20, the thermo-element and the PTC heater 20 are put into the actuator case 11, capped, and screwed together to form the thermo-element and PTC heater 20 assembly, which assembly is then screwed together and fixedly mounted in place. However, with the present invention it is possible to solve such problems at a stroke.

That is, with the configuration described above, in the mounting of the temperature-sensitive actuator onto the housing or other such mount of the device that is the drive source of the temperature-sensitive actuator, it is possible to fix the temperature-sensitive actuator fully in place simply by pressing the actuator into the electrical terminals 51, 52 that act as fixing jigs, thus eliminating the need for the screws, bolts, nuts, and other such fixing means, thereby facilitating assembly. Moreover, since there is no need to press terminal fittings into the body of the actuator, it is possible to minimize both cost and the number of parts.

The present invention is not limited to the embodiments described above, and it is possible to vary and change the shapes, structures, and so forth of the various parts that comprise the temperature-sensitive actuator 10 as needed.

For example, as described in JP-2006-57497-A, by using the temperature-sensitive actuator 10 described above in place of a power motor as a motorized actuator for controlling the operation of a choke or a throttle that opens and closes the intake mainly in a driven member of an electronic valve control device or the like of a carburetor adapted to an ordinary engine, it is possible to obtain the effect of the present invention.

In particular, using the temperature-sensitive actuator 10 utilizing a thermo-element in place of a power motor as a drive source for a variety of electrical devices as described above provides such advantages as allowing the overall apparatus to be made smaller and more compact as well as saving energy by using the battery less often.

Of course, the present invention is not limited to use in the devices described above, and is effective when used in any field in which the motorized actuator 10 outputs a required lift amount when energized.

## Claims

1. A temperature-sensitive actuator (10) **characterized by** having:
a thermo-element having a thermal expansion unit (12) sealed within a temperature-sensitive part (13) of the thermo-element;
a PTC heater (20) that selectively heats the temperature-sensitive (13) part of the thermo-element; and
a contact member (40) inserted between the temperature-sensitive part (13) of the thermo-element and the PTC heater (20).

2. The temperature-sensitive actuator (10) according to claim 1, **characterized in that** the contact member (40) has a shape such that a portion of a side of the contact member (40) that contacts the thermo-element lacks a contacting part.

3. The temperature-sensitive actuator (10) according to either claim 1 or claim 2, further **characterized by** having a pair of electrical terminals (51, 52) provided at an actuator mount (50) for the temperature-sensitive actuator (10) and configured to fixedly hold the temperature-sensitive actuator (10) on both sides of the temperature-sensitive actuator (10) along a central axis of the temperature-sensitive actuator (10),
**characterized in that** the temperature-sensitive actuator (10) is configured to be fixedly held at the actuator mount (50) side by being engaged and held at two places in the axial direction of the temperature-sensitive actuator (10) by the pair of electrical terminals (51, 52).
